# EUROPÄISCHE PATENTSCHRIFT

(11) **EP 1 898 289 B1**
(45) Veröffentlichungstag und Bekanntmachung des Hinweises auf die Patenterteilung: **15.08.2012**
(21) Anmeldenummer: 07016713.5
(22) Anmeldetag: 27.08.2007
(51) Int. Cl.: G05D 1/02

(54) **Modulares System zur Steuerung eines Flächenbearbeitungsgeräts**
Modular system for providing an infrastructure to control a surface machining device
Système modulaire pour réaliser une infrastructure de commande d'un appareil de traitement de surfaces

(30) Priorität: 02.09.2006 DE 102006041485
(43) Veröffentlichungstag der Anmeldung: 12.03.2008
(73) Patentinhaber: InMach Intelligente Maschinen GmbH, 89081 Ulm (DE)
(72) Erfinder: Kämpke, Thomas, 89075 Ulm (DE); Kluge, Boris, 89077 Ulm (DE); Strobel, Matthias, 89079 Ulm (DE)
(74) Vertreter: Meyer, Thorsten

(56) Entgegenhaltungen:
- EP-A- 1 639 934
- DE-A1-102004 053 183
- DE-B3- 10 346 216
- US-A- 4 919 224
- US-B1- 6 615 108

## Beschreibung

Die Erfindung betrifft ein Modulares System zum Aufbau einer Infrastruktur zur Steuerung eines in einer Umgebung mit wenigstens einer Arbeitsfläche selbstfahrenden Flächenbearbeitungsgeräts. Des weiteren betrifft die Erfindung ein Flächenarbeitsgerät mit einer solchen Infrastruktur.

Bekannt sind selbstfahrende Geräte wie beispielsweise selbstfahrende Rasenmäher oder selbstfahrende Reinigungsroboter. Bei diesen ist in ihrer derzeitigen Ausführungsform die Anwendbarkeit in bestimmten Arbeitsumgebungen mit deren individuellen Merkmalen limitiert. Darüber hinaus setzen diese Geräte zur flächendeckenden Bearbeitung zufällige Bewegungen, so genannte Random-Walk-Strategien ein, welche in Ihrer Effizienz und oft auch in der Qualität des Arbeitsergebnisses nicht der Erwartungshaltung eines typischen Konsumenten genügen.

Zur systematischen Bearbeitung seines Einsatzgebietes benötigt ein selbstfahrender Roboter eine gute Kenntnis seiner eigenen Position und Lage. Allgemein verfügbare Navigationshilfen wie das Globale Positionierungssystem GPS sind von ihrer Genauigkeit und Verfügbarkeit typischerweise nicht ausreichend. Bekannte, spezielle Installationen von Navigationshilfen sind von hohem Aufwand und beziehen die Steuerung von Bearbeitungsmodalitäten durch das selbstfahrende Gerät nicht mit ein.

Einfache, gängige Installationen für selbstfahrende Rasenmäher bestehen beispielsweise nur aus einer stromdurchflossenen Leiterschleife zur Markierung der Berandung des Einsatzgebiets. Innerhalb dieser Leiterschleife arbeiten die bekannten Rasenmähroboter nach dem Navigationsprinzip der Zufallssteuerung (engl. Random-Walk). Diese Leiterschleifen unterstützen die Positionsbestimmung nicht und die Bewegungsmodalitäten nur geringfügig.

In der US 6,615,108 B1 ist eine solche Installation mit einem autonomen Roboter in einem Gebiet gezeigt, dessen Außengrenzen durch eine oben genannte geschlossene Außenmarkierung definiert sind.

Nach dem Stand der Technik nach der DE 103 46 216 B3 ist ein Verfahren zur Steuerung eines Bodenreinigungsgeräts bekannt, bei dem vorgeschlagen ist, das mobile Bodenreinigungsgerät vermittels durch dieses erfassbaren auf der Bodenfläche ausgebrachten Markierungselementen zu steuern, wobei den zuvor ausgebrachten Markierungselementen objektspezifische Parameter zuordnet werden, die die Bodenfläche charakterisieren. Nachteilig hierbei ist, dass eine umfassende Einlernphase und Ermittlung der Umgebungsinformationen erfolgen muss, die in die Markierungselemente einprogrammiert werden müssen, damit diese die objektspezifischen Parameter zur Steuerung des Bodenreinigungsgeräts aufweisen. Auch ist eine nach neuen Wünschen oder Gegebenheiten andere Steuerung des Bodenreinigungsgerät von außen (insbesondere durch den Benutzer) nur durch eine aufwändige Umprogrammierung und/oder Einlernung der objektspezifisch geprägten Markierungselemente möglich. Weiterhin nachteilig ist, dass Markierungselemente rein zufällig aufzufinden sind, was eine effektive Berücksichtigung dieser schwierig macht.

Aufgabe der Erfindung ist es bei selbstfahrenden Flächenarbeitsgeräten die Effektivität der Arbeitsleistung dadurch zu erhöhen und qualitativ bessere Ergebnisse zu erzielen, dass die Auffindbarkeit der Markierungselemente deutlich erhöht ist.

Diese Aufgabe wird durch ein modulares System nach den Merkmalen des Anspruchs 1 und ein Flächenarbeitsgerät nach den Merkmalen des Anspruchs 16 gelöst.

Erfindungsgemäß ist ein modulares System zur Steuerung eines in einer Umgebung mit wenigstens einer Arbeitsfläche selbstfahrenden Flächenbearbeitungsgeräts, wobei das System wenigstens einen Befehlssatz, wenigstens ein Markierungselement sowie ein Steuerungseinrichtung umfasst, wobei die Befehle des Befehlssatzes wenigstens teilweise parametrisierbar sind und in ihrer Ausgestaltung generisch sind, wobei wenigstens ein Markierungselement typisiert ist, wobei jeder Typ dadurch festgelegt ist, dass er einen oder mehrere Befehle des Befehlssatzes enthält, wobei der Steuerungseinrichtung (wenigstens eine Vorrichtung zur Erfassung des wenigstens einen Markierungselemente und dessen Typ zur Befehlserkennung zugeordnet ist, wobei die Steuerungseinrichtung einen Prozessor zur kontextabhängigen Abarbeitung des oder der Befehle aus dem wenigstens einen Markierungselement aufweist, wobei eine ein Gebiet abgrenzende stromdurchflossene Leiterschleife vorgesehen ist, welche in Kombination mit wenigstens einem typisierten Markierungselement eingesetzt ist, wobei das wenigstens eine typisierte Markierungselement innerhalb eines Bereichs um oder unter/auf der stromdurchflossenen Leiterschleife angeordnet ist, in welchem es von der dafür vorgesehen Erfassungseinrichtung eines Flächenarbeitsgerätes erfasst wird, welches sich entlang der stromdurchflossenen Leiterschleife oder auf diese zu bewegt, wobei sich ein oder mehrere Befehle des Befehlssatzes auf den Verlauf der stromdurchflossenen Leiterschleife beziehen.

Somit ist der Aufbau einer Infrastruktur ermöglicht, die von der Steuerung eines selbstfahrenden Geräts zu dessen Mobilität in einer vorgegebenen Einsatzumgebung genutzt werden kann. Die Installation erfolgt mittels vorgefertigter Komponenten, die platziert, kombiniert und in ihrer Ausprägung modifiziert werden können.

Einer der Vorteile der Erfindung liegt darin, die Möglichkeit zur Vorstrukturierung einer individuellen Arbeitsumgebung eines Roboters, insbesondere eines Roboters zum Rasenmähen zu schaffen, so dass dieser mit den Gegebenheiten und Besonderheiten dieser Arbeitsumgebung umgehen kann. Hierzu zählt beispielsweise eine möglichst vollständige und/oder eine möglichst systematische Abdeckung der Arbeitsumgebung und ggf. die Minimierung der dazu benötigten Zeit.

Die Umgebung ist dabei befahrbar oder auch nicht, die Arbeitsfläche ist Teil der Umgebung auf der eine Arbeit durch das Flächenbearbeitungsgerät verrichtet werden soll.

Ein möglicher Parameter eines Befehls ist beispielsweise eine Aktivierung oder Deaktivierung einer Arbeitsvorrichtung.

Nach einer vorteilhaften Ausgestaltung der Erfindung ist vorgesehen, dass der Befehlssatz mit dessen Parametrisierung und insbesondere der generischen Programmierung komplett in dem/den Markierungselementen hinterlegt ist. Hierdurch kann eine sehr vielfältige Anpassung und Weiterentwicklung der gesamten Einrichtung erfolgen, ohne, dass Eingriffe an der Steuerung oder dem Flächenarbeitsgerät vorgenommen werden muss. Es genügt, die Programmierung der Markierungen anzupassen.

Nach einer anderen Variante der Erfindung ist vorgesehen, dass mehrere Befehlssätze teilweise oder komplett in der Steuerungseinrichtung bzw. deren Speicher hinterlegt sind und durch eine eindeutige Kennung und/oder Klassifizierung aus dem/den Markierungselementen auf den jeweiligen Befehlssatz passend zum jeweiligen Einsatzgebiet oder dem vorliegenden Satz anhand eines speziellen Befehlssatzes typisierter Markierungen referenziert wird.

Dem gemäß einer weiteren vorteilhaften Ausgestaltung der Erfindung vorgesehen, dass bei der Abarbeitung der Befehle zu deren Vervollständigung oder Parametrisierung vermittels hierzu vorgesehener Sensoren aktuelle sensorisch wahrgenommene Umgebungsinformation berücksichtigt werden und/oder Bewegungs- und Sensorinformationen aus der Abarbeitungs- und Sensorhistorie, die in einem in der Steuerungseinrichtung vorgesehenen Speicher gespeichert ist, berücksichtigt werden. Hierdurch können unbekannte oder sich ändernde Einflüsse der Umgebung berücksichtigt werden.

Von Vorteil sind die Markierungselemente wenigstens teilweise durch RFID-Tags ausgebildet. Weiterhin von Vorteil aufgrund der relativen Unempfindlichkeit gegenüber Wasser oder Feuchtigkeitseinflüssen sind die Markierungselemente im Außenbereich wie beispielsweise beim Einsatz im Zusammenhang mit einem Rasenmäher durch RFID-Tags im low-frequency Frequenzbereich zwischen 100 kHz und 150 kHz, insbesondere 125kHz oder 134kHz ausgebildet.

Eine weitere Ausgestaltung der Erfindung sieht vor, dass stromdurchflosse Drahtschleifen vorgesehen sind, welche insbesondere den oder die Befehle eines zugeordneten Markierungselements codiert übertragen. Hierdurch ist eine bauliche Erweiterung der Wirkung durch erweiterte Wahrnehmbarkeit der Markierung möglich.

Eine weitere vorteilhafte Weiterbildung der Erfindung sieht vor, dass die geometrische Ausgestaltung die Markierungselemente als punktuelle, linienförmige und flächige Markierungselemente durch einen, insbesondere programmierungsbedingten, zuordenbaren Zusammenschluss mehrerer Markierungselemente oder durch bauliche Veränderungen und/oder Kombinationen im Rahmen des modularen Baukastensystems, insbesondere der Antenne bei RF-ID-Tags oder stromdurchflossener Drahtschleifen als Markierungselementen erfolgen kann.

Dabei umfasst die Erfindung auch mögliche Kombinationen solcher geometrisch ausgestalteter Markierungselemente zu weiteren Markierungselementen wodurch an die Erfordernisse der jeweiligen Arbeitsumgebung angepasst werden kann.

Die Parameter des oder der Befehle in einem Markierungselement sind nach einer weiteren vorteilhaften Ausgestaltung der Erfindung durch die Steuerungseinrichtung reversibel oder irreversibel veränderlich.

Von Vorteil ist ein Programmiergerät zur reversiblen oder irreversiblen Programmierung oder Parametrisierung der Markierungselemente vorgesehen, wobei dieses insbesondere in oder an dem Flächenbearbeitungsgeräts und insbesondere eine dort vorgesehene Interaktionsschnittstelle nutzt oder in Zubehörteilen dessen ausgebildet ist. Hierdurch ist eine einfache und praktische Neuprogrammierung und damit Typisierung oder auch nur eine Parameteranpassung der Markierungen ermöglicht.

Die Typisierung der Markierungselemente ist nach einer besonders bevorzugten Ausgestaltung der Erfindung von außen visuell wahrnehmbar, wobei farbliche und/oder geometrische und/oder Ziffern/Text Kennzeichnungen an den Markierungen angebracht sind, wobei diese insbesondere durch manuell veränderbare insbesondere durch auswechselbare Formteile ausgebildet sind. Hierdurch ist das System für den Benutzer leicht verständlich und der Aufbau der Infrastruktur schnell durchführbar.

Nach einer besonders bevorzugten Ausgestaltung der Erfindung sind als Befehle des Befehlssatzes insbesondere vorgesehen:
- absolute Arbeitsflächenabgrenzung, die nicht überfahren werden darf,
- bedingte Arbeitsflächenabgrenzung, zur Segmentierung der Umgebung und/oder der Arbeitsfläche,
- Fahranweisung zum Wechsel zwischen nicht zusammenhängenden Teilflächen der Umgebung und/oder der Arbeitsfläche insbesondere durch Übertritt einer absolute Arbeitsflächenabgrenzung,
- Abfahranweisung lokaler flächendeckender Bewegungsmuster,
- Positionierungsangaben zu und insbesondere mit Fahranweisung zu wenigstens einem weiteren Markierungselement in der Umgebung, insbesondere mit Angabe einer Ortungsstrategie,
- Fahranweisung zu wenigstens einem Objekt in der Umgebung, insbesondere mit Angabe einer Ortungsstrategie,
- Fahrstrategie zum Erreichen von Orten oder Objekten auf einem von diesem Befehl tragenden Markierungselement kürzesten Weg,
- Fahranweisung wenigstens ein weiteres Markierungselement zu suchen, insbesondere mit Angabe einer Ortungsstrategie, das gemäß einer definierten Platzierung in der Umgebung eine Bestimmung der Position der Steuerungseinheit und/oder deren Orientierung bzw. einer Richtung in der Umgebung ermöglicht,
- geometrische Kennzeichnung, insbesondere Terminierung einer lokalen Abfahranweisung.

Nach einer besonders vorteilhaften Ausgestaltung der Erfindung ist vorgesehen, dass die das Gebiet abgrenzende stromdurchflossene Leiterschleife eine eigene Codierung bzw. Typisierung aufweist.

Eine oder mehrere Befehle des Befehlssatzes beziehen sich von Vorteil auf den lokalen Verlauf der stromdurchflossenen Leiterschleife.

Bei Verwendung von Markierungselementen bei denen sich zur Erkennung bzw. zur Kommunikation mit der oder den Vorrichtungen zu Erfassung derer, Konflikte ergeben erfolgt von Vorteil eine zeitliche, insbesondere zeitlich synchronisierte, Entkopplung sich beeinflussender Erfassungseinheiten und/oder Markierungselemente.

Bevorzugterweise handelt es sich bei dem Flächenarbeitsgerät um ein selbstfahrendes Gerät zur Bodenbearbeitung, insbesondere einen Rasenmäher oder ein Reinigungsgerät.

Weitere Vorteile der Erfindung ergeben sich aus den weiteren Unteransprüchen sowie deren möglicher Unterkombinationen.

Das vorgeschlagene System kann wie ein Baukasten verwendet werden. Dabei werden die im folgenden aufgezählten Bausteine bereitgestellt.

Markierungselemente von festgelegten Typen, denen ein Befehlssatz zugeordnet ist. Jeder Typ von Markierungselement ist dadurch gekennzeichnet, dass er einem oder mehreren Befehlen des Befehlssatzes entspricht. Jeder Befehl kann einen oder mehrere Parameter beinhalten wie beispielsweise Entfernungen, Winkel, Zeitangaben, Bewegungsart des Roboters und Aktionen seiner Sensoren. Ein Markierungselement kann mit einer Vorrichtung zur Datenspeicherung versehen sein.

Die geometrische Ausformung der Markierungselemente als punktuelle, linienförmige und flächige Markierungselemente sowie ggf. Kombination derer zu weiteren Markierungselementen, welche an die Erfordernisse der jeweiligen Arbeitsumgebung angepasst werden können.

Der Steuerungseinrichtung mit einer Vorrichtung zur Erfassung der Markierungselemente und deren Information sowie Verfahren zur Interpretation und kontextabhängigen Abarbeitung des oder der Befehle.

Einem Gerät zur flexiblen Anpassung, d.h. Programmierung oder Parametrisierung von Markierungselementen. Bevorzugt ist dieses Geräte bereits mit in das selbstfahrende Flächenbearbeitungsgerät oder in Zubehörteile dessen integriert und nutzt die Interaktionsschnittstelle dieses Gerätes.

Das selbstfahrende Flächenbearbeitungsgerät selber.

Die Markierungselemente können zudem über eine äußere Kennzeichnung verfügen, die den Typ erkennen lässt und bei Programmierung eines anderen Typs ("Umprogrammierung") möglichst geändert werden kann.

Schließlich können Verlege- und Installationsrichtlinien den Baukasten ergänzen.

Der den Typen der Markierungselemente zugrunde liegende Befehlssatz für die Robotersteuerung besteht aus Bewegungs- und Bearbeitungsanweisungen. Diese können in offensichtlicher Weise von einem mobilen Flächenbearbeitungsgerät ausgeführt werden. Gleiches trifft auf generische Befehle zu; dies sind Makrobefehle, die aus dem Befehlssatz aufgebaut werden. Sofern ein Markierungselement mit einer Vorrichtung zur Datenspeicherung versehen ist, können Befehle des Befehlssatzes dort als solche oder in Kurzform ("Codierungen" der Befehle) abgelegt werden. Ist die Vorrichtung zur Datenspeicherung von zu geringer Kapazität (Speicherkapazität) oder ist die Kapazität der Übertragung (Kanalkapazität) zum Erfassungsgerät der Steuerung des Mobilgeräts zu gering, muss auf Befehlscodierungen zurückgegriffen werden. Die Befehlscodierungen werden in einem Codebuch hinterlegt. Das Codebuch ist dann ein Teil der Steuerung des Flächenbearbeitungsgeräts. Ebenso ist bei der Verwendung eines Codebuches dieses auch in einem optionalen Gerät zur flexiblen Anpassung der Markierungselemente abgelegt bzw. das Gerät zur flexiblen Anpassung kann auf das Codebuch zugreifen und Codewörter lesen und schreiben. Die Verwendung von Codebüchern ist im allgemeinen bekannt.

Der Befehlssatz für die Markierungselemente umfasst vorzugsweise Befehle der nachfolgenden neun Typen oder einer Teilmenge davon. Sinngemäße Modifikationen und Erweiterungen sind ebenso Bestandteil dieser Erfindung.

Nachfolgend wird die Erfindung anhand der Zeichnungen weiter erläutert. Im Einzelnen zeigt die schematische Darstellung in:
- Fig. 1: eine schematische Darstellung eines Einsatzes von Markierungselementen vom Typ absolute Arbeitsflächenabgrenzung in einer Umgebung,
- Fig. 2: eine schematische Darstellung des Einsatzes eines Markierungselementes vom Typ bedingte Arbeitsflächenabgrenzung in einer Umgebung,
- Fig. 3: eine schematische Darstellung des Einsatzes eines Markierungselementes vom Typ Fahranweisung zum Wechsel zwischen nicht zusammenhängenden Teilflächen der Umgebung,
- Fig. 4: eine schematische Darstellung des Einsatzes eines Markierungselementes vom Typ Abfahranweisung lokaler flächendeckender Bewegungsmuster nach einer ersten Variante,
- Fig. 5: eine schematische Darstellung des Einsatzes eines Markierungselementes vom Typ Abfahranweisung lokaler flächendeckender Bewegungsmuster nach einer zweiten Variante,
- Fig. 6: eine schematische Darstellung des Einsatzes eines Markierungselementes vom Typ Abfahranweisung lokaler flächendeckender Bewegungsmuster nach einer dritten Variante,
- Fig. 7: eine schematische Darstellung des Einsatzes eines Markierungselementes vom Typ Abfahranweisung lokaler flächendeckender Bewegungsmuster nach einer vierten Variante,
- Fig. 8: eine schematische Darstellung des Einsatzes eines Markierungselementes vom Typ Abfahranweisung lokaler flächendeckender Bewegungsmuster nach einer fünften Variante,
- Fig. 9: eine schematische Darstellung des Einsatzes eines Markierungselementes vom Typ Abfahranweisung lokaler flächendeckender Bewegungsmuster nach einer sechsten Variante,
- Fig. 10: eine schematische Darstellung des Einsatzes eines Markierungselementes vom Typ Abfahranweisung lokaler flächendeckender Bewegungsmuster nach einer siebten Variante,
- Fig. 11: eine schematische Darstellung des Einsatzes eines Markierungselementes vom Typ Positionierungsangaben mit Fahranweisung zu wenigstens einem weiteren Markierungselement,
- Fig. 12: eine schematische Darstellung des Einsatzes eines Markierungselementes vom Typ Fahranweisung zu wenigstens einem Objekt,
- Fig. 13: eine schematische Darstellung des Einsatzes eines Markierungselementes vom Typ Fahranweisung zur Bestimmung der Position,
- Fig. 14: eine schematische Darstellung des Einsatzes eines Markierungselementes vom Typ Fahranweisung zur Bestimmung der Richtung,
- Fig. 15: eine schematische Darstellung des Einsatzes eines Markierungselementes vom Typ Fahranweisung zur Bestimmung der Richtung nach einer zweiten Variante,
- Fig. 16a: bis 16c drei Beispiele einer Extraktion eines lokalen Merkmalsverlaufes,
- Fig. 17: eine schematische Darstellung des erfindungsgemäßen Systems,
- Fig. 18a: bis 18c eine Darstellung einer geometrischen Ausgestaltung einer Markierung, und
- Fig. 19a: bis 19c eine Darstellung einer geometrischen Ausgestaltung einer Markierung.

Die in den Figuren gleichen Bezugsziffern bezeichnen gleiche oder gleich wirkende Elemente.

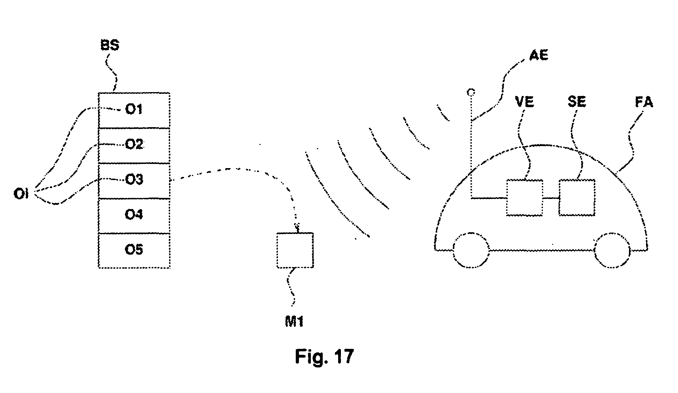

Fig. 17 zeigt das erfindungsgemäße modulare System zum Aufbau einer Infrastruktur zur Steuerung eines in einer Umgebung mit wenigstens einer Arbeitsfläche selbstfahrenden Flächenbearbeitungsgeräts FA mit einem Befehlssatz BS.

Ein Befehl Oi des Befehlssatzes BS ist im Beispiel in die Markierung M1 programmiert worden, was diese Markierung typisiert.

Die Steuerungseinrichtung SE und die ihr zugeordnete Vorrichtung zur Erfassung VE der Markierungselemente ist in dem Flächenbearbeitungsgeräts FA ausgebildet und steuert dessen Motoren (nicht dargestellt). Im Beispiel ist das Markierungselement durch einen RF-ID-Tag ausgebildet, der mittels der Antenne AE detektiert wird.

Im folgenden werden die Typen der Markierungen bzw. die Befehle des beispielhaften Befehlssatzes näher erläutert.

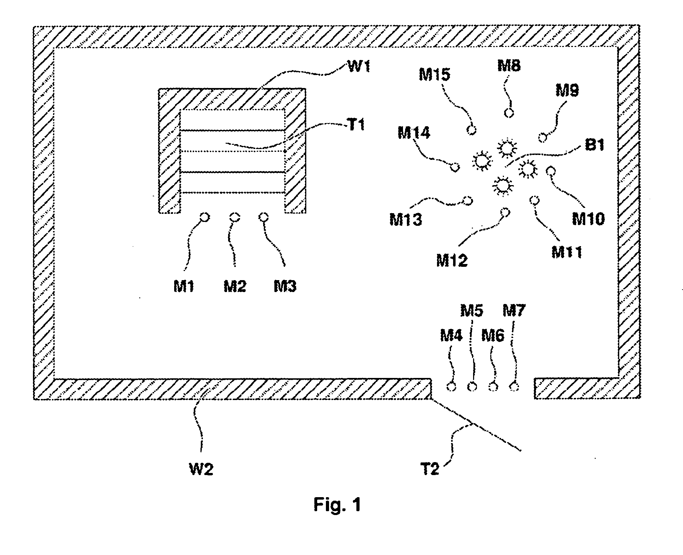

Fig. 1 zeigt ein Markierungselemente zur absoluten Arbeitsbereichsabgrenzung (unbedingte Abgrenzung).

Markierungselemente vom Typ absolute Arbeitsflächenabgrenzung in einer Umgebung eignen sich beispielsweise zur Abgrenzung eines in einer Arbeitsfläche F1 liegenden und von einer Wand W1 begrenzten Treppenabgangs T1 welcher nicht mit geräteeigener Sensorik wie Schaltern in Stossstange oder abstandsmessender Sensor erkannt wird. Die Abgrenzung erfolgt hierbei mittels der Markierungen M1,M2,M3. Die Fläche F1 ist nach außen hin durch eine Wand W2 begrenzt bis auf ein Tor T2 welches auch geöffnet sein kann. Es werden hier vorzugsweise Abgrenzungsmarkierungen M4, M5, M6, M7 vom Typ 1 eingesetzt um ein Verlassen der Arbeitsfläche F1 auch bei geöffnetem Tor T2 zu verhindern.

Objekte wie beispielsweise ein Blumenbeet B1 können typischerweise nicht mit taktiler Sensorik und auch nicht sicher mit abstandsmessender Sensorik wie Ultraschall erfasst werden. Hier bietet es sich an Markierungselemente vom Typ absolute Arbeitsflächenabgrenzung in einer Umgebung einzusetzen um das Blumenbeet B1 abzugrenzen.

Mögliche Parameter dieses Typs ist eine optionale Distanzangabe um welche die Begrenzung überfahren werden darf bzw. soll oder eine Flächen- und oder Objektidentifikationskennzeichnung.

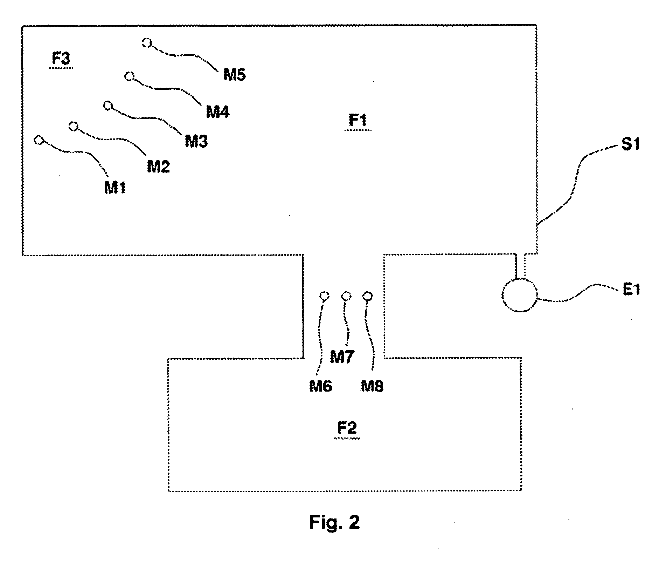

Fig. 2 zeigt Markierungselemente zur bedingten Abgrenzung (Segmentierung) von Flächen mit einer Installation für einen Mähroboter als Flächenabarbeitungsgerät, bei der eine durch eine Elektronik E1 gespeiste Leiterschleife S1 die Arbeitsflächen F1 und F2 umschließt.

Markierungselemente vom Typ bedingte Arbeitsflächenabgrenzung in einer Umgebung eignen sich dazu, Teilflächen innerhalb der Arbeitsumgebung abzugrenzen und darauf unterschiedliche Bearbeitungsmodalitäten vorzusehen. Beispielsweise kann eine Bearbeitung Teilflächen-weise mit unterschiedlicher Häufigkeit und/oder zu bevorzugten Zeiten vorgenommen oder ausgeschlossen werden. Ebenso kann eine solche Segmentierung dazu genutzt werden, eine Teilfläche erst dann zu bearbeiten, wenn die Bearbeitung einer anderen vollständig erledigt ist. Schließlich können beispielsweise bei selbstfahrenden Rasenmähern mit unterschiedlichen Einstellungsmöglichkeiten des Mähwerks diese teilflächenabhängig vorgenommen werden.

Mögliche Parameter dieses Typs: Flächen-Identifikationskennzeichnungen der angrenzenden Flächen; Datums und Zeitangaben innerhalb derer die bedingte Abgrenzung relevant ist.

Um einen definierten Verbleib innerhalb einer bestimmten Fläche bei z.B. der Random-Walk-Mähstrategie zu gewährleisten wird hier eine bedingte Abgrenzung zwischen den Flächen F1 und F2 vorgenommen durch Markierungen M6, M7, M8 vom Typ bedingte Arbeitsflächenabgrenzung in einer Umgebung vorgenommen.

Des Weiteren kann es sinnvoll sein Teilflächen zu bestimmten Uhrzeiten oder Tagen abzugrenzen (z.B. Teilfläche (F3) von (F1) durch Markierungen (M1 bis M5 vom Typ 2) sonntags ausgegrenzt, damit Nutzer nicht beim Kaffeetrinken auf der Terrasse gestört wird).

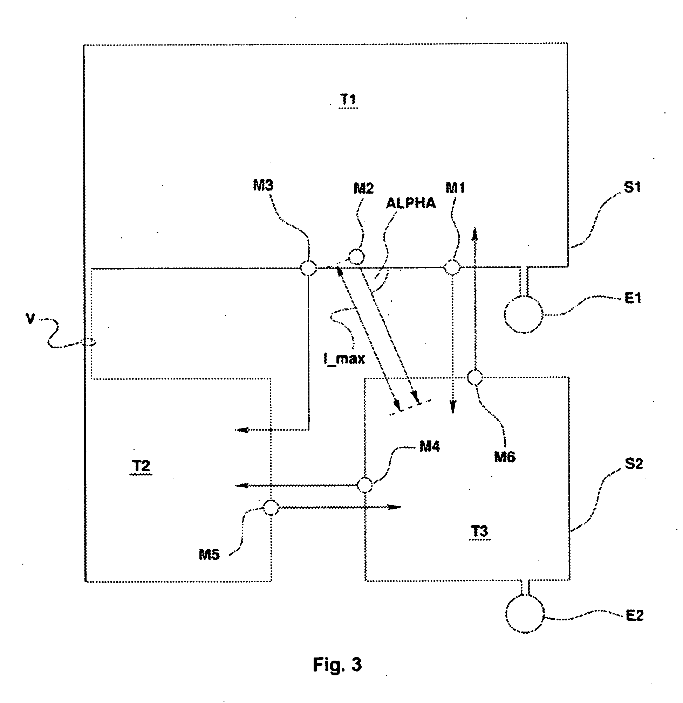

Fig. 3 zeigt Markierungselemente zum Wechsel zwischen nicht zusammenhängenden Teilflächen.

Diese Markierungselemente Mi zum Flächenwechsel werden vorzugsweise so in der Arbeitsumgebung angebracht, dass sie durch Fahrverhalten wie Folgen einer Leiterschleife Si (M1, M3, M4, M5, M6 auf einer Leiterschleife angebracht, M2 nahe der Leiterschleife S1 aber noch innerhalb des Erfassungsbereiches der Vorrichtung beim Schleifenfolgen) oder Folgen des Verlaufs einer Wand in einem bestimmten Abstand leicht aufzufinden sind.

Parameter:
a.) Fahranweisung zum Wechsel zwischen Flächen. Diese kann entweder aus einem einzelnen Wegelement (z.B. geradem Streckenstück) oder aus einer Sequenz von Wegelementen bestehen.
b.) Optional Referenz in Winkel und/oder Position für Wegelement (z.B. fahre max. eine Distanz von 1_max ALPHA Grad bezüglich lokalem Schleifenverlauf beim Folgen im Gegenuhrzeigersinn ab Position Markierungselement).
c.) Optional die Arbeitseinheit betreffende Parameter: Anhalten der Mäheinheit beim Wechsel zwischen den Teilflächen; Anheben der Mäheinheit beim Wechsel.

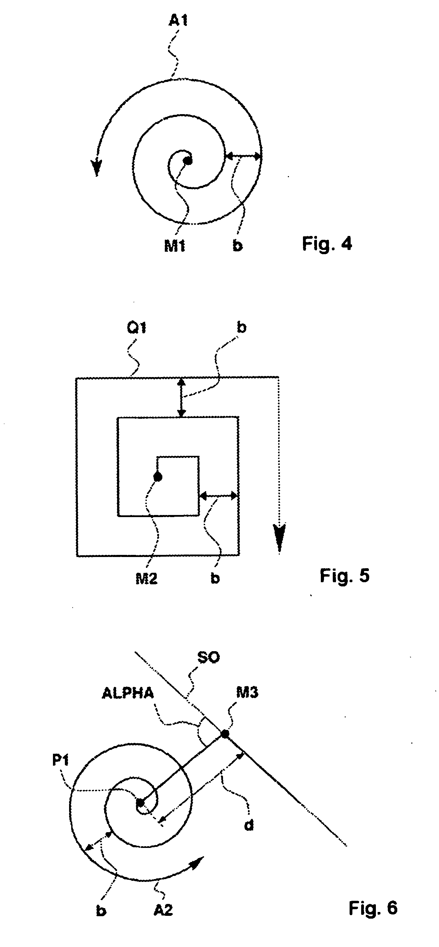

Die Fig. 4 bis 10 zeigen Markierungselemente für lokale flächendeckende Bewegungsmuster.

Markierungselemente vom Typ Abfahranweisung lokaler flächendeckender Bewegungsmuster enthalten Befehle für i.A. lokale flächendeckende Bewegungsmuster. Beispiele für solche flächendeckenden Bewegungsmuster wären archimedische Spiralen, Mäanderbahnen, typische Bahnverläufe wie sie auch beim Fräsen (Taschenfräsen) eingesetzt werden, und insbesondere lokale flächendeckende Bewegungsmuster welche sich an Umgebungsmerkmalen wie Leiterschleifenverlauf und / oder Hindernissen orientieren.

Im Folgenden werden Beispiele für lokal eingesetzte flächendeckende Bewegungsmuster und den entsprechenden Markierungselementen vom Typ Abfahranweisung lokaler flächendeckender Bewegungsmuster anhand der Fig. 4 bis Fig. 10 näher erläutert:
Fig. 4 zeigt einer archimedische Spiralbahn A1 mit Zentrum um Markierungselement M1 mit Drehrichtung im Gegenuhrzeigersinn und einer Aufweitung pro Bahnumdrehung der Länge b.
Fig. 5 zeigt eine rechteckige Spiralbahn R1 mit Angabe des Längen zu Breitenverhältnisses mit Zentrum um Markierungselement M2 mit Drehrichtung im Uhrzeigersinn und einer Aufweitung der Länge b.
Fig. 6 zeigt eine archimedische Spiralbahn A2 mit Zentrum um Punkte P1 welcher ausgehend vom Markierungselement M3, der lokalen Schleifenverlaufsrichtung in gegebener Fahrtrichtung um einen Winkel ALPHA in den Parametern des Markierungselements M3 spezifiziert ist. Die Aufweitung pro Bahnumdrehung von A2 entspricht der Länge b.

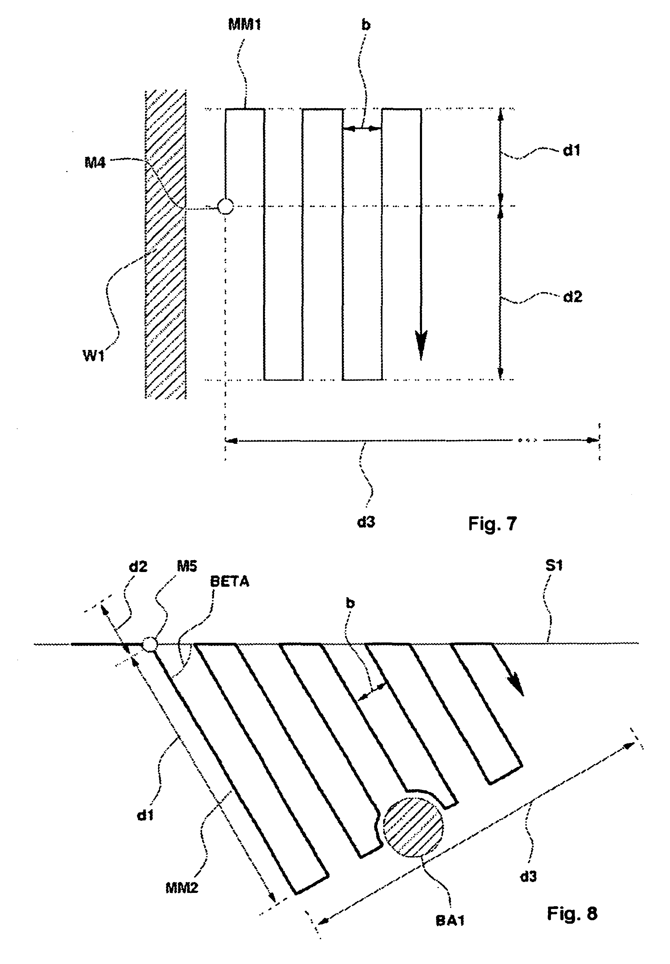

Fig. 7 zeigt ein Mäandermuster MM1 ausgehend vom Markierungselement M4 parallel zum lokalen Hindernisverlauf W1 mit der gewünschten maximalen Feldgröße angegeben durch die Parameter d1, d2, d3.
Fig. 8 zeigt ein Mäandermuster MM2 ausgehend vom Markierungselement M5 aufzusetzen in einem Winkel BETA zum lokalen Verlauf der Leiterschleife S1 mit der gewünschten maximalen Feldgröße angegeben durch die Parameter d1, d2, d3.
   An diesem Beispiel ist zu sehen, dass die Steuerung Umsetzung der Spezifikation von wie in M5 gegeben unter Beachtung lokaler Begrenzungen wie die der Leiterschleife S1 und des Baumes BA1 umsetzt.

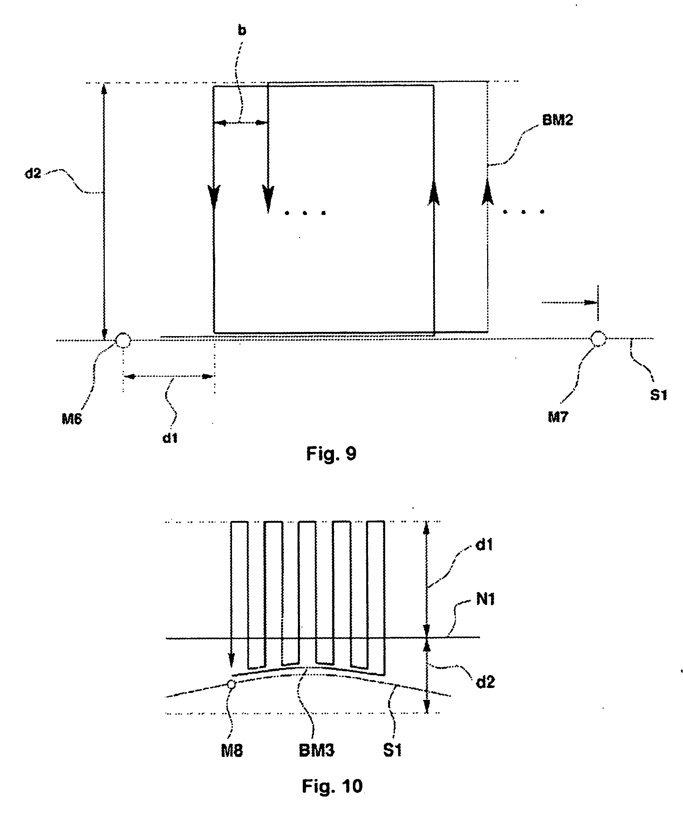

Fig. 9 zeigt ein lokal flächendeckendes Bahnmuster BM2 bei welchem zur Winkelbestimmung zyklisch stückweise dem Verlauf der Leiterschleife S1 gefolgt wird. Die maximale Eindringtiefe ist durch den Parameter d2 gegeben, ein Offset entlang des Leiterschleifenverlaufs zu Markierungselement M6 durch den Parameter d1. Die Terminierung dieses lokal flächendeckenden Bewegungsmuster ist durch ein Markierungselement M7 vom Typ geometrische Kennzeichnung zur Terminierung einer lokalen Abfahranweisung gegeben.
   Markierungselemente M7 für geometrische Kennzeichnung werden beispielsweise für die Terminierung von lokalen Bewegungsmustern eingesetzt. Mögliche Parameter: Optional Kennungs-ID; Optional geometrische Angaben wie beispielsweise Begrenzungsinformation relativ zum Markierungselement oder eines durch die Steuerung erkennbaren Umgebungsmerkmals sofern beispielsweise nicht die direkte Position des Markierungselements vom Typ 9 als Referenz herangezogen werden soll.
Fig. 10 zeigt ein lokal flächendeckendes Bahnmuster BM3 bei welchem ausgehend vom Markierungselement M8 vom Typ Abfahranweisung lokaler flächendeckender Bewegungsmuster dem lokalen Schleifenverlauf gefolgt wird um daraus eine Gerade N1 zu berechnen zu welcher dann senkrecht eine Mäanderbahn gefahren wird.

Die möglichen Parameter hängen bei diesem Markierungstyp insbesondere vom ausgewählten lokalen flächendeckenden Bewegungsmuster ab. Am Beispiel der archimedischen Spirale wären dies die gewünschte Aufweitung pro Umdrehung (Bahnabstand b), die Drehrichtung, der maximale Spiraldurchmesser.
I.A. enthalten die Parameter der Bewegungsmuster optionale Angaben über
a) Offset (in Position und/oder Orientierung) bezüglich einer
b) angegebenen Referenz (z.B. ,,lokale Leiterschleifenorientierung im Uhrzeigersinn"; "Hindernisverlauf links der Schleife", "relativ zur nächstgelegenen Ecke").
c) gewünschte und maximale Ausdehnung (z.B. max. Spiralradius, Feldgröße angegeben in Länge und Breite, Distanzangabe um die eine Leiterschleifenbegrenzung überfahren werden soll).

Insbesondere können hier auch Parameter angegeben werden welche sich auf weitere Markierungselemente, bevorzugt vom Typ geometrische Kennzeichnung, insbesondere Terminierung einer lokalen Abfahranweisung, beziehen. Siehe hierzu auch Fig. 9 und Beschreibung zu Markierungstyp geometrische Kennzeichnung.

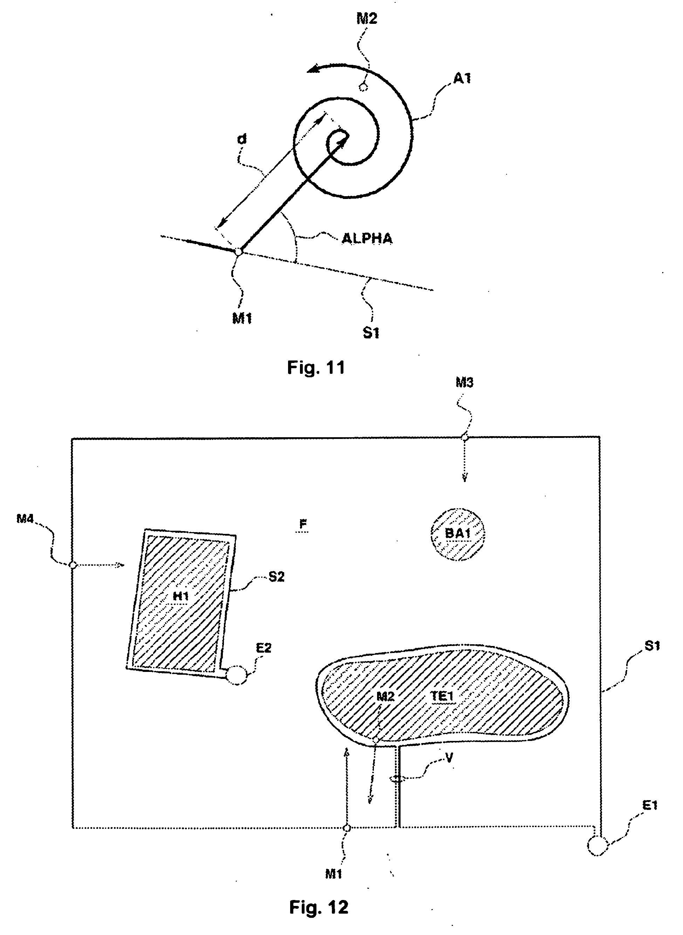

Fig. 11 zeigt ein Markierungselement für Positionierungsangaben zu weiteren Markierungselementen mit optionaler Angabe einer Ortungsstrategie.

Markierungselemente dieses Typs werden dazu eingesetzt, den Weg von einem Markierungselement zu einem oder mehreren weiteren Markierungselementen beliebigen Typs zu weisen.

Das dargestellte Beispiel zeigt die Verwendung eines Markierungselementes welches ausgehend von der Position des Markierungselementes M1 einen Weg der Distanz d in Richtung ALPHA bezüglich des Umgebungsmerkmals "lokale Schleifenrichtung" weist. Da aufgrund von z.B. Geländeunebenheiten oder sonstigen Störungseinflüssen das Markierungselement M2 i.a. bei weiteren Entfernungen nicht exakt angefahren werden kann, wird im Beispiel auch eine lokale Ortungsstrategie in Form einer archimedischen Spirale A1 angegeben. Innerhalb deren flächendeckenden Verlaufes wird das Markierungselement M2 mit i.a. hoher Wahrscheinlichkeit aufgefunden.

Parameter: Wegbeschreibung; optional Angabe zu Umgebungsmerkmalen wie z.B. lokaler Schleifenverlauf auf oder relativ zu der sich die Wegbeschreibung bezieht; optional Ortungsstrategie.

Fig. 12 zeigt Markierungselemente für Fahranweisungen zu wenigstens einem Objekt (Wegweiser zu Objekten).

Die Abgrenzung von Objekten kann hierbei explizit durch z.B. mittels einer Leiterschleife oder implizit durch deren Geometrie gegeben sein. Das dargestellte Beispiel zeigt eine vermittels der Elektronik E1 gespeiste Leiterschleife S1, welche die Arbeitsfläche F begrenzt. Des Weiteren befinden sich drei Objekte innerhalb der Arbeitsfläche F: Ein Baum BA1, ein durch eine separate Leiterschleife S2 (samt Elektronik E2 zur Speisung) abgegrenzter Kleintierfreilauf H1 und ein unter Zuhilfenahme der Leiterschleife S1 abgegrenzter Teich TE1. Die Verbindung V der Leiterschleife S1 zum Teich ist für den Schleifensensor nicht detektierbar.

Damit die Steuerung das Flächenbearbeitungsgerät (im Beispiel ein Mähroboter) die kompletten Berandungen systematisch mähen kann, werden Markierungselemente vom Typ Fahranweisung zu wenigstens einem Objekt in der Umgebung eingesetzt um auf innenliegende Objekte vom Rand aus zu verweisen. Der Mähroboter bzw. dessen Steuerung wird somit in die Lage versetzt, neben dem Mähen der Außenberandung der Arbeitsfläche mittels Markierungselement M3 unter einem Winkel relativ zum lokalen Verlauf von S1 in Richtung eines Objektes BA1 zu fahren, dessen Berandung dann mittels geeigneter Sensorik (taktil oder berührungslos) und lokaler Fahrstrategie gemäht werden kann. Dasselbe erfolgt für die Kombination M4/H1. Bei diesen Objekten wird davon ausgegangen, dass das Flächenbearbeitungsgerät das Ende des Randmähens um das jeweilige Objekt selbst detektieren kann (z.B. Odometrie- und/oder Intertialsensorikgestützt) und auf die äußere Leiterschleife S1 zurückkehren kann. Ist dies nicht der Fall kann wie bei der Kombination M1/T1 ein weiteres Markierungselement M2 vom Typ Fahranweisung zu wenigstens einem Objekt in der Umgebung eingesetzt werden, mit Hilfe dessen eine Umrundung des Objektes erkannt werden kann und welches den Weg zum Objekt Außenschleife weist.

Parameter: Weg- oder Richtungsbeschreibung; optional Angabe zu Umgebungsmerkmalen wie z.B. lokaler Schleifenverlauf auf oder relativ zu der sich die Wegbeschreibung bezieht; optional Angaben über Zielobjekt wie beispielsweise "durch Leiterschleife begrenztes Hindernis".

Markierungselemente vom Typ Fahrstrategie zum Erreichen von Orten oder Objekten auf einem von diesem Befehl tragenden Markierungselement kürzesten Weg können beispielsweise für Schnellrückfahrtvorrichtung bei einer Mähroboterinstallation mit Leiterschleifenbegrenzung eingesetzt werden. Der Roboter muss dann nicht dem kompletten Leiterschleifenverlauf folgen um z.B. in seine Basisstation zurückzufahren, sondern kann den Weg dorthin gemäß den Weg- oder Richtungsinformationen des Markierungselements abkürzen. Auch hier ist eine Parametrisierung möglich für Umfahrungsanweisungen z.B. um teilweise Verstellung oder zeitweise abgegrenzten Leiterschleifenverlauf.

Parameter: Weg- oder Richtungsbeschreibung; optional Angabe zu Umgebungsmerkmalen wie z.B. lokaler Schleifenverlauf auf oder relativ zu der sich die Wegbeschreibung bezieht.

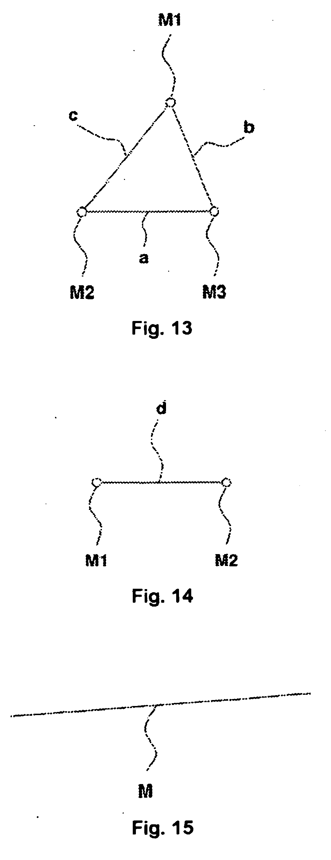

Die Fig. 13 bis 15 zeigen Markierungselemente zur lokalen Bestimmung der Richtung und / oder der Position.

Dazu werden beispielsweise drei punktuelle Markierungselemente M1 bis M3 in Form eines Dreiecks ausgelegt und in jedem die Daten dieses Musters gespeichert, siehe Fig. 13.

Dies geschieht durch die Anzahl "3" der am Muster beteiligten Markierungselemente und durch die Entfernungen a,b,c. Sobald das Mobilgerät eines der drei Markierungselemente trifft, kann eine Suche (mit oder ohne Betätigung des Mähwerks im Fall eines Rasenmähers) einsetzen, bis die beiden anderen Markierungselemente detektiert wurden. Durch Abgleich der während der Suchbewegung aufgezeichneten Odometriedaten mit dem Dreieck kann das Mobilgerät seine Position und Orientierung relativ zum Dreieck bestimmen.

Gemäß Fig. 14 ist eine andere Ausprägung von punktuellen Markierungselementen gezeigt, wobei nur zwei Markierungselemente M1 und M2 vom Typ Fahranweisung zur Bestimmung der Richtung ausgebracht werden. In jedem wird die Anzahl "2" und die Entfernung d zwischen diesen gespeichert. Trifft das Mobilgerät auf eines dieser beiden Markierungselemente, so wird eine Suchbewegung nach dem anderen gestartet. Sobald dies gefunden wurde, kann mittels der während des Suchvorgangs aufgezeichneten Odometriedaten eine Vorzugsrichtung bestimmt werden, z.B. parallel oder senkrecht zur Strecke zwischen den beiden Markierungselementen. Die Vorzugsrichtung kann zur Festlegung von Richtungen für Mäanderbahnen benutzt werden.

Zur Bestimmung einer Vorzugsrichtung kann ebenso gemäß Fig. 15 ein einziges, linienhaftes Markierungselement vom Typ Fahranweisung zur Bestimmung der Richtung ausgebracht werden. Sobald dies vom Mobilgerät detektiert wird, wird dessen Richtung durch Abfahren bestimmt, woraus sich die Vorzugsrichtung dann in einfacher Weise ergibt.

Parameter: Anzahl und Entfernung von Markierungselementen für Position und Richtungsbestimmung. Optional kann die Art der Suchbewegung nach anderen Markierungselementen gespeichert sein. Optionale Anweisungen für die Bestimmung einer Vorzugsrichtung z.B. "parallel" oder "senkrecht". Optional können auch Markierungselemente anderen Typs mit zur Bestimmung von Position und Orientierung herangezogen werden.

Die Markierungselemente selber können mittels verschiedener Techniken realisiert werden. Bevorzugte aber nicht ausschließliche Ausgestaltungen sind Transponder, insbesondere RFID Transponder sowie stromdurchflossene Drahtschleifen mit Speiselektronik. Letztere kann optional die Information des Markierungselements codieren. Weitere Codierungstechniken sind beispielsweise visueller Art. Hierunter fallen Strichcodierungen ("Barcodes") und Codierungen mit Farben und/oder Formen.

Zur Ausgestaltung von Markierungselementen sind beispielsweise auch Laserreflektoren und aktive Funk- oder Ultraschallbaken geeignet.

Die Markierungselemente eines Navigationsbaukastens können auch aus einer Mehrzahl von Realisierungstechniken bestehen.

Sofern ein Markierungselement baubedingt auf die Versorgung mit elektrischer Energie angewiesen ist, kann diese aus Batterien oder einem Stromnetz entnommen werden oder durch Photovoltaikelemente aus Sonnenenergie gewinnbar sein.

Erfassungsgeräte für Markierungselemente sind bekannt. Die Erfassung besteht dabei sowohl aus der Feststellung des Vorhandenseins eines Markierungselements in der unmittelbaren Nähe des Erfassungsgeräts als auch in der Feststellung des Typs des Markierungselements.

Die Markierungselemente können mit einer Kennung aus Formen und/oder Farben und/oder Zeichen wie Ziffern und Buchstaben versehen sein, die den Typ kennzeichnen. Diese Typkennung erleichtert die Handhabung der Markierungselemente auch ohne Verwendung eines Erfassungsgeräts.

Optionaler Bestandteil des Baukastens ist ein Gerät zur flexiblen Anpassung der Markierungselemente. Dieses erlaubt, Parametrisierungen der Markierungselemente durchzuführen und, in einer weiteren Ausbaustufe, die Markierungselemente auch zu programmieren, d.h. ihren Typ festzulegen und zu ändern ("umprogrammieren"). Die Typkennung der Markierungselemente ohne Verwendung eines Erfassungsgeräts sollte dann veränderbar sein, z.B. mittels auswechselbarer Formteile.

Die Befehle mehrerer Markierungselementtypen erfordern eine zumindest lokale Referenz bezüglich Position und/oder Orientierung.

Eine in der Robotik gängige Möglichkeit dieser Referenzbestimmung ist, diese aus lokalen (sensorisch erfassten) Merkmalen zu extrahieren.

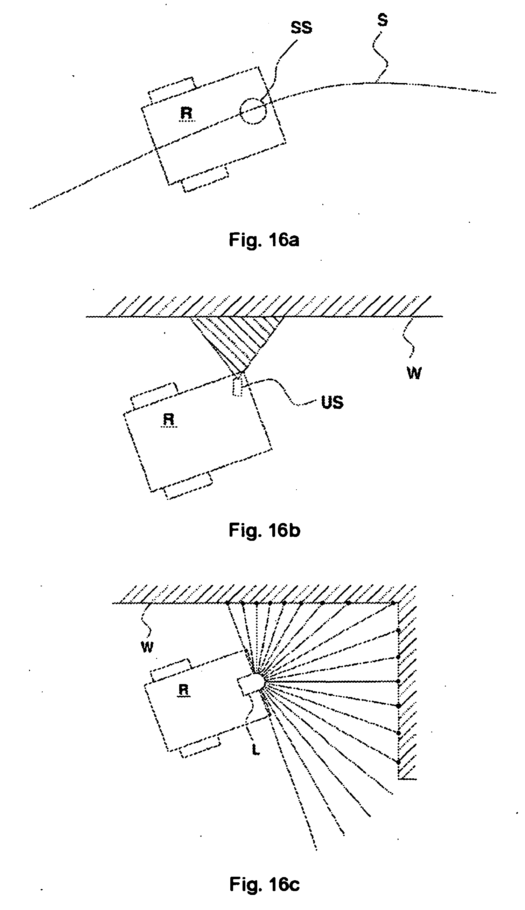

Beispiele einer Extraktion eines lokalen Merkmalsverlaufes sind in Fig. 16a bis 16c angegeben.
Fig. 16a: durch Folgen einer Leiterschleife S mittels Schleifensensor SS unter Einbezug der Historie (Sequenz von Odometrie- und anderen Sensordaten)
Fig. 16b: durch Folgen einer Wand z.B. mittels Ultraschallsensor US unter Einbezug der Historie (Sequenz von Odometrieund anderen Sensordaten)
Fig. 16c: durch Auswertung eines aktuellen Sensorabbildes z.B. von einem Laserscanner L

Eine weitere Möglichkeit ist es, die Ausführungsform der Markierungselemente so zu gestalten, dass diese selbst zur lokalen Referenzierung in Position und/oder Richtung herangezogen werden können. Vgl. hierzu den speziellen Markierungselementtyp Fahranweisung wenigstens ein weiteres Markierungselement zu suchen zur Bestimmung von Position und/oder Richtung dessen Gestaltung auch für andere Markierungselementtypen verwendet werden kann damit diese dann für Vorgaben auf ihr eigenes Referenzsystem anstatt wie in den Beispielen beschrieben auf Merkmale wie den lokalen Schleifenverlauf zurückgreifen müssen.

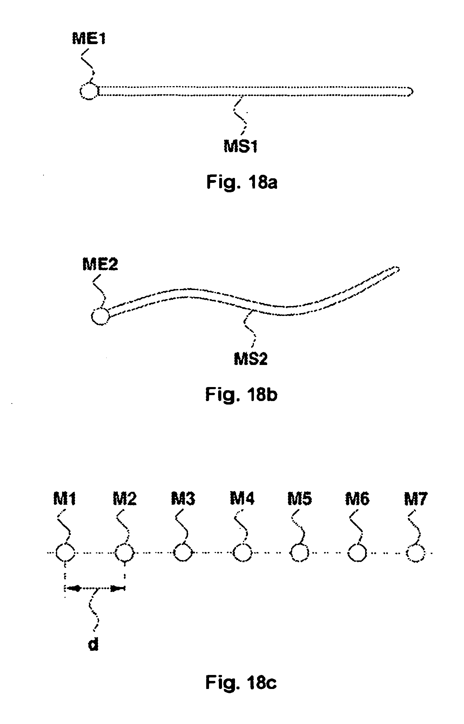

Fig. 18a bis 18c zeigt in drei beispielhaften Varianten die geometrische Ausgestaltung der Markierungselemente.

Im Beispiel nach Fig. 18a ist ein Markierungselement ME1 als linienförmig ausgestaltet, wobei einem RF-ID-Tag eine erweiterte Antennenschleife MS1 zugeordnet wird.

Im Beispiel nach Fig. 18b ist ein weiteres Markierungselement ME2 mit gekrümmten Verlauf der zugeordneten Antennenschleife MS2 gezeigt.

Im Beispiel nach Fig. 18c ist eine programmierungsbedingt zuordenbarer Zusammenschluss mehrerer Markierungselemente M1 bis M7 gezeigt, die in einem Abstand d zueinander ausgebracht worden sind als punktuelle, linienförmige und flächige Markierungselemente durch einen, insbesondere programmierungsbedingten, zuordenbaren Zusammenschluss mehrerer Markierungselemente oder durch bauliche Veränderungen insbesondere der Antenne bei RF-ID-Tags oder stromdurchflossener Drahtschleifen als Markierungselementen erfolgen kann.

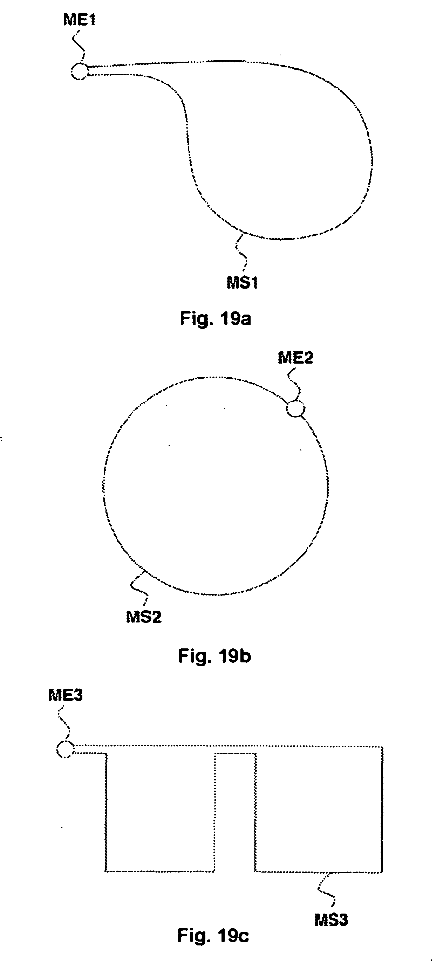

Fig. 19a bis 19c zeigt in drei beispielhaften Varianten die geometrische Ausgestaltung der Markierungselemente durch flächiges Formen von stromdurchflossenen Drahtschleifen MSi, denen ein Markierungselement MEi zugeordnet ist.

Eine weitere vorteilhafte Ausprägung der Erfindung ist es, die geometrische Ausgestaltung der Markierungselemente (Mi, MEi) als punktuelle, linienförmige und flächige Markierungselemente durch einen, insbesondere programmierungsbedingten, zuordenbaren Zusammenschluss mehrerer Markierungselemente oder durch bauliche Veränderungen und/oder Kombinationen im Rahmen des modularen Baukastensystems, insbesondere der Antenne bei RF-ID-Tags oder stromdurchflossener Drahtschleifen MSi als Markierungselementen erfolgen kann. D.h. der Erfassungsbereich kann hier durch weitere Elemente des Baukastens, insbesondere Antennen mit den eigentlichen Markierungselementen kombiniert werden. Siehe hierzu auch Fig. 19a bis 19c.

Eine besonders vorteilhafte Ausprägung der Erfindung ist es, stromdurchflossene Leiterschleifen Si welche insbesondere eine eigene Codierung bzw. Typisierung haben in Kombination mit typisierten Markierungselementen Mi, MEi mit MSi einzusetzen. Insbesondere der kombinierte Einsatz von stromdurchflossene Leiterschleifen Si welche insbesondere eine eigene Codierung bzw. Typisierung haben in Kombination mit einem oder mehreren typisierten Markierungselementen Mi, MEi mit MSi erweist sich in der Praxis, z.B. beim Einsatz in Verbindung mit einem automatischen Rasenmäher, als besonders vorteilhaft:
Hierbei werden ein oder mehrere typisierten Markierungselemente Mi, MEi mit MSi innerhalb des Bereiches um oder unter/auf der stromdurchflossenen Leiterschleife Si angeordnet, in welchen diese von der dafür vorgesehen Erfassungseinrichtung eines Flächenarbeitsgerätes erfasst werden können welches sich entlang der stromdurchflossenen Leiterschleife Si oder auf diese zu bewegt. Es ist somit auch für ein einfaches autonomes Gerät ohne absolute Lokalisierungseinrichtung möglich, diese Markierungen, z.B. durch Folgen der stromdurchflossenen Leiterschleife Si, effizient aufzufinden.

Die Kombination von Markierungselementen Mi, MEi mit MSi mit stromdurchflossenen Leiterschleifen Si bietet weiterhin den Vorteil, dass eine oder mehrere Befehle des Befehlssatzes sich auf den Verlauf der stromdurchflossenen Leiterschleife, insbesondere deren lokalen Verlaufes, beziehen. Siehe hierzu auch die in den Abbildungen, z.B. Abbildung Fig. 11, beschriebenen Beispiele.

Bei der Verwendung von Markierungselementen bei denen sich zur Erkennung bzw. zur Kommunikation mit der oder den Vorrichtungen zu Erfassung derer, Konflikte ergeben, wird erfindungsgemäss eine zeitliche Entkopplung sich beeinflussender Erfassungseinheiten z.B. RFID-Schreib-Leseeinheit und Erfassungseinheit des Signals der stromdurchflossenen Leiterschleife Si vorgeschlagen.

### Bezugszeichenliste

- Ai: Spiralbahn
- AE: Antenne
- Bi: Blumenbeet
- BAi: Baum
- BMi: Bahnmuster
- BS: Befehlssatz
- b: Länge
- di: Parameter
- Ei: Elektronik
- Fi, F: Arbeitsfläche
- FA: Flächenbearbeitungsgerät
- Hi: Kleintierfreilauf
- L: Laserscanner
- Mi: Markierung
- MEi: Markierungselement
- MSi: Drahtschleife, Antennenschleife
- MM1: Mäandermuster
- Ni: Gerade
- Oi: Befehl
- Pi: Punkt
- Ri: Spiralbahn
- Si: Leiterschleife
- SE: Steuerungseinrichtung
- SS: Schleifensensor
- T1: Treppenabgang
- T2: Tor
- TEi: Teich
- US: Ultraschallsensor
- V: Verbindung
- VE: Vorrichtung zur Erfassung
- Wi: Wand
- Wl: Hindernisverlauf
- ALPHA: Winkel
- BETA: Winkel

## Patentansprüche

1. Modulares System zur Steuerung eines in einer Umgebung mit wenigstens einer Arbeitsfläche selbstfahrenden Flächenbearbeitungsgeräts (FA), wobei das System wenigstens einen Befehlssatz (BS), wenigstens ein Markierungselement (Mi, MEi) sowie ein Steuerungseinrichtung (SE) umfasst,
wobei die Befehle (Oi) des Befehlssatzes (BS) wenigstens teilweise parametrisierbar sind und in ihrer Ausgestaltung generisch sind,
wobei wenigstens ein Markierungselement (Mi, MEi) typisiert ist, wobei jeder Typ dadurch festgelegt ist, dass er einen oder mehrere Befehle des Befehlssatzes (BS) enthält,
wobei der Steuerungseinrichtung (SE) wenigstens eine Vorrichtung zur Erfassung (VE) des wenigstens einen Markierungselemente (Mi, MEi) und dessen Typ zur Befehlserkennung zugeordnet ist,
wobei die Steuerungseinrichtung (SE) einen Prozessor zur kontextabhängigen Abarbeitung des oder der Befehle aus dem wenigstens einen Markierungselement (Mi, MEi) aufweist,
wobei eine ein Gebiet abgrenzende stromdurchflossene Leiterschleife (Si) vorgesehen ist, welche in Kombination mit wenigstens einem typisierten Markierungselement (Mi; MEi, MSi) eingesetzt ist,
wobei das wenigstens eine typisierte Markierungselement (Mi; MEi, MSi) innerhalb eines Bereichs um oder unter/auf der stromdurchflossenen Leiterschleife (Si) angeordnet ist, in welchem es von der dafür vorgesehen Erfassungseinrichtung eines Flächenarbeitsgerätes erfasst wird, welches sich entlang der stromdurchflossenen Leiterschleife (Si) oder auf diese zu bewegt,
**dadurch gekennzeichnet,**
**dass** ein oder mehrere Befehle des Befehlssatzes sich auf den Verlauf der stromdurchflossenen Leiterschleife (Si) beziehen.

2. Modulares System nach Anspruch 1,
**dadurch gekennzeichnet,**
**dass** der Befehlssatz mit dessen Parametrisierung und insbesondere der generischen Programmierung komplett in dem/den Markierungselementen (Mi, MEi) hinterlegt ist.

3. Modulares System nach Anspruch 1,
**dadurch gekennzeichnet,**
**dass** Befehlssätze teilweise oder komplett in der Steuerungseinrichtung (SE) hinterlegt sind und durch eine eindeutige Kennung und/oder Klassifizierung aus dem/den Markierungselementen (Mi, MEi) auf den jeweiligen Befehlssatz (BS) referenziert wird.

4. Modulares System nach einem der Ansprüche 1 bis 3,
**dadurch gekennzeichnet,**
**dass** bei der Abarbeitung der Befehle zu deren Vervollständigung oder Parametrisierung vermittels hierzu vorgesehener Sensoren aktuelle sensorisch wahrgenommene Umgebungsinformation berücksichtigt werden und/oder
Bewegungs- und Sensorinformationen aus der Abarbeitungs- und Sensorhistorie, die in einem in der Steuerungseinrichtung vorgesehenen Speicher gespeichert ist, berücksichtigt werden.

5. Modulares System nach einem der vorhergehenden Ansprüche,
**dadurch gekennzeichnet,**
**dass** die Markierungselemente (Mi, MEi) wenigstens teilweise durch RFID-Tags ausgebildet sind, die insbesondere durch RFID-Tags im low-frequency Frequenzbereich zwischen 100 kHz und 150 kHz, insbesondere 125kHz oder 134kHz ausgebildet sind.

6. Modulares System nach einem der vorhergehenden Ansprüche,
**dadurch gekennzeichnet,**
**dass** stromdurchflosse Drahtschleifen (MSi) vorgesehen sind, welche insbesondere den oder die Befehle eines zugeordneten Markierungselements codiert übertragen.

7. Modulares System nach einem der Ansprüche 1 bis 6,
**dadurch gekennzeichnet,**
**dass** die geometrische Ausgestaltung die Markierungselemente (Mi, MEi) als punktuelle, linienförmige und flächige Markierungselemente durch einen, insbesondere programmierungsbedingten, zuordenbaren Zusammenschluss mehrerer Markierungselemente oder durch bauliche Veränderungen und/oder Kombinationen im Rahmen des modularen Baukastensystems, insbesondere der Antenne bei RF-ID-Tags oder stromdurchflossener Drahtschleifen (MSi) als Markierungselementen erfolgen kann.

8. Modulares System nach einem der vorhergehenden Ansprüche,
**dadurch gekennzeichnet,**
**dass** die Parameter des oder der Befehle in einem Markierungselement (Mi, MEi) durch die Steuerungseinrichtung (SE) reversibel oder irreversibel veränderlich sind.

9. Modulares System nach einem der Ansprüche 1 bis 8,
**dadurch gekennzeichnet,**
**dass** ein Programmiergerät zur reversiblen oder irreversiblen Programmierung oder Parametrisierung der Markierungselemente (Mi, MEi) vorgesehen ist, wobei dieses insbesondere in oder an dem Flächenbearbeitungsgeräts (FA) und insbesondere eine dort vorgesehene Interaktionsschnittstelle nutzt oder in Zubehörteilen dessen ausgebildet ist.

10. Modulares System nach einem der vorhergehenden Ansprüche,
**dadurch gekennzeichnet,**
**dass** die Typisierung der Markierungselemente (Mi, MEi) von außen visuell wahrnehmbar durch farbliche und/oder geometrische und/oder Ziffern/Text gekennzeichnet ist, wobei diese insbesondere durch manuell veränderbare insbesondere durch auswechselbare Formteile ausgebildet sind.

11. Modulares System nach einem der vorhergehenden Ansprüche,
**dadurch gekennzeichnet,**
**dass** als Befehle des Befehlssatzes (BS) insbesondere vorgesehen sind:
- absolute Arbeitsflächenabgrenzung, die nicht überfahren werden darf,
- bedingte Arbeitsflächenabgrenzung, zur Segmentierung der Umgebung und/oder der Arbeitsfläche,
- Fahranweisung zum Wechsel zwischen nicht zusammenhängenden Teilflächen der Umgebung und/oder der Arbeitsfläche insbesondere durch Übertritt einer absolute Arbeitsflächenabgrenzung,
- Abfahranweisung lokaler flächendeckender Bewegungsmuster,
- Positionierungsangaben, insbesondere mit Fahranweisung, zu wenigstens einem weiteren Markierungselement in der Umgebung, insbesondere mit Angabe einer Ortungsstrategie,
- Fahranweisung zu wenigstens einem Objekt in der Umgebung, insbesondere mit Angabe einer Ortungsstrategie,
- Fahrstrategie zum Erreichen von Orten oder Objekten auf einem von diesem Befehl tragenden Markierungselement kürzesten Weg,
- Fahranweisung wenigstens ein weiteres Markierungselement zu suchen, insbesondere mit Angabe einer Ortungsstrategie, das gemäß einer definierten Platzierung in der Umgebung eine Bestimmung der Position der Steuerungseinheit und/oder deren Orientierung bzw. einer Richtung in der Umgebung ermöglicht,
- geometrische Kennzeichnung, insbesondere Terminierung einer lokalen Abfahranweisung.

12. Modulares System nach einem der vorhergehenden Ansprüche,
**dadurch gekennzeichnet,**
**dass** die stromdurchflossene Leiterschleife (Si) eine eigene Codierung bzw. Typisierung aufweist.

13. Modulares System nach einem der vorhergehenden Ansprüche,
**dadurch gekennzeichnet,**
**dass** eine oder mehrere Befehle des Befehlssatzes sich auf den lokalen Verlauf der stromdurchflossenen Leiterschleife (Si) beziehen.

14. Modulares System nach einem der vorhergehenden Ansprüche,
**dadurch gekennzeichnet,**
**dass** bei Verwendung von Markierungselementen (Mi, MEi) bei denen sich zur Erkennung bzw. zur Kommunikation mit der oder den Vorrichtungen zu Erfassung derer, Konflikte ergeben, eine zeitliche, insbesondere zeitlich synchronisierte, Entkopplung sich beeinflussender Erfassungseinheiten und/oder Markierungselemente erfolgt.

15. Modulares System nach einem der vorhergehenden Ansprüche,
**dadurch gekennzeichnet,**
**dass** die Markierungselemente (Mi, MEi) wenigstens teilweise Anweisungen enthalten aus welchen Betriebszustände für das Arbeitsmodul abgeleitet werden können.

16. Modulares System nach einem der vorhergehenden Ansprüche,
**dadurch gekennzeichnet,**
**dass** das Flächenarbeitsgerät ein selbstfahrendes Gerät zur Bodenbearbeitung wie einen Rasenmäher oder ein Reinigungsgerät ist.

## Claims

1. A modular system for controlling a surface processing unit (FA), which drives itself in an environment with at least one working area, wherein the system comprises at least one command set (BS), at least one marking element (Mi, MEi) and a control device (SE),
wherein the commands (Oi) of the command set (BS) can be at least partially parameterised and have a generic design,
wherein at least one marking element (Mi, MEi) is typed, wherein each type is defined in that it contains one or a plurality of commands of the command set (BS),
wherein the control device (SE) is assigned at least one means for detecting (VE) the at least one marking element (Mi, MEi) and the type thereof for command recognition,
wherein the control device (SE) has a processor for context-dependent execution of the command or commands from the at least one marking element (Mi, MEi),
wherein a current-carrying conductor loop (Si) is provided, which delimits an area and is used in combination with at least one typed marking element (Mi; MEi, MSi),
wherein the at least one typed marking element (Mi; MEi, MSi) is arranged inside a region around or under/on the current-carrying conductor loop (Si), in which the said marking element is detected by the detection device of a surface processing unit provided therefor, which is moved along or on the current-carrying conductor loop (Si),
**characterised in that**
one or a plurality of commands of the command set relate to the profile of the current-carrying conductor loop (Si).

2. The modular system according to Claim 1,
**characterised in that**
the command set with the parameterisation thereof and in particular the generic programming is stored entirely in the marking element(s) (Mi, MEi).

3. The modular system according to Claim 1,
**characterised in that**
command sets are partially or entirely stored in the control device (SE) and reference is made to the respective command set (BS) by means of unambiguous labelling and/or classification from the marking element(s) (Mi, MEi).

4. The modular system according to one of Claims 1 to 3,
**characterised in that**
when the commands are executed, current environmental information captured sensorically by means of sensors provided therefor is taken into account and/or movement and sensor information from the execution and sensor history, which is stored in a memory provided in the control device, is taken into account in order to complete or parameterise the commands.

5. The modular system according to one of the preceding claims,
**characterised in that**
the marking elements (Mi, MEi) are formed at least partially by RFID tags, which are in particular formed by RFID tags in the low-frequency range between 100 kHz and 150 kHz, in particular 125 kHz or 134 kHz.

6. The modular system according to one of the preceding claims,
**characterised in that**
current-carrying wire loops (MSi) are provided, which in particular transmit the command(s) of an associated marking element in a coded manner.

7. The modular system according to one of Claims 1 to 6,
**characterised in that**
the marking elements (Mi, MEi) can be shaped geometrically as point-shaped, line-shaped and areal marking elements by means of an assignable, in particular programmed, combination of a plurality of marking elements or by means of structural changes and/or combinations within the modular system, in particular of the antenna in the case of RFID tags or current-carrying wire loops (MSi) as marking elements.

8. The modular system according to one of the preceding claims,
**characterised in that**
the parameters of the command(s) in a marking element (Mi, MEi) can be changed reversibly or irreversibly by the control device (SE).

9. The modular system according to one of Claims 1 to 8,
**characterised in that**
a programming unit is provided for reversible or irreversible programming or parameterisation of the marking elements (Mi, MEi), wherein the said programming unit is formed in particular in or on the surface processing unit (FA) and in particular uses an interaction interface provided there or is formed in accessory parts thereof.

10. The modular system according to one of the preceding claims,
**characterised in that**
the typing of the marking elements (Mi, MEi) is characterised such that it can be perceived visually from the outside by colour and/or geometrically and/or by numbers/text, wherein the latter are formed by moulded parts which can be manually changed and in particular replaced.

11. The modular system according to one of the preceding claims,
**characterised in that**
the following are in particular provided as commands of the command set (BS):
- absolute working area boundary which must not be crossed,
- conditional working area boundary for segmenting the environment and/or the working area,
- driving instructions for changing between noncohesive partial areas of the environment and/or the working area in particular by crossing an absolute working area boundary,
- starting instructions for local, area-covering movement patterns,
- positioning information, in particular with driving instructions, for at least one further marking element in the environment, in particular stating a location strategy,
- driving instructions for at least one object in the environment, in particular stating a location strategy,
- driving strategy for reaching locations or objects on the shortest route from this command-carrying marking element,
- searching driving instructions of at least one further marking element, in particular stating a location strategy, which allows the position of the control unit and/or the orientation thereof or a direction in the environment to be determined according to a defined positioning in the environment,
- geometric characterisation, in particular timing of a local starting instruction.

12. The modular system according to one of the preceding claims,
**characterised in that**
the current-carrying conductor loop (Si) has its own code or type.

13. The modular system according to one of the preceding claims,
**characterised in that**
one or a plurality of commands of the command set relate to the local profile of the current-carrying conductor loop (Si).

14. The modular system according to one of the preceding claims,
**characterised in that**
when marking elements (Mi, MEi) are used with which conflicts result in the recognition of or communication with the device(s) for detecting them, a chronological, in particular chronologically synchronised, decoupling of detection units and/or marking elements which affect each other takes place.

15. The modular system according to one of the preceding claims,
**characterised in that**
at least some of the marking elements (Mi, MEi) contain instructions from which operating states can be derived for the working module.

16. The modular system according to one of the preceding claims,
**characterised in that**
the surface processing unit is a self-driving device for working the ground, such as a lawnmower or a cleaning device.

## Revendications

1. Système modulaire pour la commande d'un appareil de surface (FA) autotracteur dans un environnement comprenant au moins une surface de travail, le système comprenant au moins un ensemble d'instructions (BS), au moins un élément de marquage (Mi, MEi) et un dispositif de commande (SE),
les instructions (OI) de l'ensemble d'instructions (BS) pouvant être au moins en partie paramétrables et étant génériques dans leur conception,
au moins un élément de marquage (MI, MEI) étant typisé, chaque type étant défini par le fait qu'il contient une ou plusieurs instructions de l'ensemble d'instructions (BS), et au moins un dispositif d'enregistrement (VE) du au moins un élément de marquage (MI, MEI) et son type pour l'identification d'instruction étant attribués au système de commande (SE),
le dispositif de commande (SE) présentant un processeur pour le traitement dépendant du contexte de la ou des instructions à partir du au moins un élément de marquage (Mi, MEi), une boucle de conducteur (Si) traversée par le courant et délimitant un domaine étant prévue, laquelle est utilisée en combinaison avec au moins un élément de marquage (Mi ; MEi, MSi) typisé,
le au moins un élément de marquage (Mi ; MEi, MSi) typisé étant disposé à l'intérieur d'une zone autour ou au-dessous /sur la boucle de conducteur (Si) traversée par le courant, dans laquelle il est saisi par le dispositif d'enregistrement prévu à cet effet d'un appareil de travail de surface, lequel se déplace le long de la boucle de conducteur (Si) traversée par le courant ou est déplacé en direction de celle-ci,
**caractérisé**
**en ce qu'**une ou plusieurs instructions de l'ensemble d'instructions se rapportent au tracé de la boucle de conducteur (Si) traversée par le courant.

2. Système modulaire selon la revendication 1,
**caractérisé**
**en ce que** l'ensemble d'instructions est déposé avec son paramétrage et en particulier la programmation générique complètement dans l'élément/les éléments de marquage (Mi, MEi).

3. Système modulaire selon la revendication 1,
**caractérisé en ce que**
l'ensemble d'instructions est déposé partiellement ou complètement dans le dispositif de commande (SE) ou est référencé par un code clair et/ou une classification claire à partir de l'élément/des éléments de marquage (Mi, MEi) sur l'ensemble d'instructions (BS) respectif.

4. Système modulaire selon l'une des revendications 1 à 3,
**caractérisé en ce que**,
lors du traitement des instructions pour les compléter ou les paramétrer, des informations sur l'environnement perçues actuellement par capteur au moyen de capteurs prévus à cet effet sont prises en compte et/ou
des informations de déplacement et de capteur provenant de l'historique de traitement et du capteur, qui est mémorisé dans une mémoire prévue dans le dispositif de commande, sont prises en compte.

5. Système modulaire selon l'une des revendications précédentes,
**caractérisé en ce que**
les éléments de marquage (Mi, MEi) sont conçus au moins en partie par des RFID-Tags, qui sont conçus en particulier par des RFID-Tags dans la plage de fréquences "low-frequency" entre 100 kHz et 150 kHz, en particulier 125 kHz ou 134 kHz.

6. Système modulaire selon l'une des revendications précédentes,
**caractérisé en ce que**
des boucles de fils traversées par le courant (MSi) sont prévues, lesquelles transmettent en particulier la ou les instructions d'un élément de marquage attribué sous forme codée.

7. Système modulaire selon l'une des revendications 1 à 6,
**caractérisé en ce que**
la conception géométrique des éléments de marquage (Mi, MEi) peut s'effectuer sous forme d'éléments de marquage ponctuels, linéaires et de surface, par un regroupement pouvant être attribué, en particulier conditionné par la programmation, de plusieurs éléments de marquage ou par des modifications de construction et/ou des combinaisons dans le cadre du système modulaire par blocs-éléments, en particulier de l'antenne dans le cas de RFID-Tags ou de boucles filaires (MSi) traversées par le courant sous forme d'éléments de marquage.

8. Système modulaire selon l'une des revendications précédentes,
**caractérisé en ce que**
les paramètres de la ou des instructions dans un élément de marquage (Mi, MEi) peuvent être modifiés par le dispositif de commande (SE) de façon réversible ou irréversible.

9. Système modulaire selon l'une des revendications 1 à 8,
**caractérisé en ce que**
un appareil de programmation est prévu pour la programmation ou le paramétrage réversible ou irréversible des éléments de marquage (Mi, MEi), celui-ci utilisant en particulier dans ou sur l'appareil de traitement de surface (FA) et en particulier une interface d'interaction prévue ici ou étant conçue dans des parties d'accessoire de cet appareil.

10. Système modulaire selon l'une des revendications précédentes,
**caractérisé en ce que**
la typisation des éléments de marquage (Mi, MEi) est perceptible de façon visuellement extérieure et **caractérisée par** des éléments de couleur et/ou géométriques et/ou des chiffres et un texte, ceux-ci étant formés en particulier par des parties moulées modifiables manuellement en particulier par des parties moulées interchangeables.

11. Système modulaire selon l'une des revendications précédentes,
**caractérisé en ce**
**qu'**il est prévu en particulier comme instructions de l'ensemble d'instructions (BS) :
- une délimitation absolue de la surface de travail, sur laquelle on ne doit pas rouler,
- une délimitation sous condition de la surface de travail, pour la segmentation de l'environnement et/ou de la surface de travail,
- une directive de conduite pour l'alternance entre des surfaces partielles non cohérentes de l'environnement et/ou la surface de travail en particulier par le franchissement d'une délimitation absolue de la surface de travail,
- une directive de franchissement de modèles de déplacement locaux et couvrant des surfaces, et
- des indications de positionnement, en particulier avec directive de conduite, pour au moins un autre élément de marquage dans l'environnement, en particulier avec indication d'une stratégie de localisation,
- une directive de conduite pour au moins un objet dans l'environnement, en particulier avec l'indication d'une stratégie de localisation,
- stratégie de déplacement pour atteindre des endroits ou des objets sur un chemin le plus court possible pour atteindre un élément de marquage portant cette instruction,
- une directive de conduite pour chercher au moins un autre élément de marquage, en particulier avec indication d'une stratégie de localisation, qui permet selon un placement défini dans l'environnement une détermination de la position de l'unité de commande et/ou de son orientation ou d'une direction dans l'environnement,
- un marquage géométrique, en particulier terminaison d'une directive de départ local.

12. Système modulaire selon l'une des revendications précédentes,
**caractérisé en ce que** la boucle de conducteur (Si) traversée par le courant présente un codage ou une typisation propre.

13. Système modulaire selon l'une des revendications précédentes,
**caractérisé**
**en ce qu'**une ou plusieurs instructions de l'ensemble d'instructions concernent le tracé local de la boucle de conducteur (Si) traversée par le courant.

14. Système modulaire selon l'une des revendications précédentes,
**caractérisé en ce que**,
- si on utilise des éléments de marquage (Mi, MEi), pour lesquels il en résulte des conflits pour la reconnaissance ou pour la communication avec le ou les dispositifs pour l'enregistrement de ces éléments, on a une dissociation dans le temps, en particulier synchronisée dans le temps; d'unités d'enregistrement et/ou d'éléments de marquage qui s'influencent.

15. Système modulaire selon l'une des revendications précédentes,
**caractérisé en ce que**
les éléments de marquage (Mi, MEi) contiennent au moins en partie des directives qui permettent de déduire des états de service pour le module de travail.

16. Système modulaire selon l'une des revendications précédentes,
**caractérisé en ce que**
l'appareil de travail de surface est un appareil autoporteur pour le traitement du sol tel qu'une tondeuse à gazon ou un appareil de nettoyage.
